# EUROPEAN PATENT APPLICATION

(11) **EP 4 668 147 A1**
(43) Date of publication of application: **24.12.2025**
(21) Application number: 24465538.7
(22) Date of filing: 21.06.2024
(51) Int. Cl.: G06F 21/57, G06F 11/36

(54) **COMPUTER DEVICE AND METHOD FOR UPDATING AN APPLICATION REPOSITORY**

(71) Applicant: Siemens Aktiengesellschaft, 80333 München (DE)
(72) Inventor: Crihana, David, 500372 Brasov (RO); Furtuna, Iosif Constantin, 500277 Brasov (RO); Husleag, Alexandru, 500170 Brasov (RO); Andrei, Laurentiu Adrian, 500419 Brasov (RO)
(74) Representative: Preda, Raluca-Laura

(57) **Abstract**

According to an aspect of the present invention, the computer device (100) includes a processor (10); and a memory (20) coupled to the processor (10), the memory (20) storing instructions, which when executed by the processor (10), cause the computer device (100) to perform operations including: performing a thread check for critical vulnerabilities on all libraries (31, 32, 33) of an application (30) from an application repository (AR); accessing a resource (50) including fixed library versions (31f, 33f) and providing at least one fixed library version (31f, 33f) for fixing; updating the at least one fixed library version (31f, 33f) in the application (30); running at least one unit test on the application (30); pushing the at least one fixed library version (31f, 33f) in the application repository (AR).

## Description

### Field of the Invention

The invention relates to the field of computer devices and methods for automatically updating application repositories on computer devices.

### Technological Background

An application repository, commonly referred to as a repo or Docker repository, is a centralized digital storage where developers may manage and store changes to an application's source code. The repository may be hosted locally on a single computer device or a local server, or it may be a remote repository which may be, for example, cloud-based or web-accessible. A repository may store container images that represent executable packages containing everything required to run a discrete application, including the code, system tools, system libraries, and settings of the application. For example, a repository may contain different versions of a single application, each tagged with its specific version number.

Application repositories typically depend on a variety of libraries and tools that developers can use to build, manage, and enhance their software projects. The libraries may contain specific routines and procedures which can be implemented in a software project or which may help the developers in the programming, distributing and managing an application.

Security patches for application repositories are crucial for maintaining the safety and integrity of an application repository. These vulnerabilities could, e.g., allow unauthorized access, data breaches, or other malicious activities. Security patches address these vulnerabilities and protect against those potential threats. Regularly updating an application repository with security patches is thus essential.

Security patches are usually done by developers every time a new vulnerability arises in the dependencies of a project. This step, although not complex or hard to perform, is time-consuming and repetitive in the lifecycle of any application.

There are several tools and frameworks that can help identify and mitigate security threats in application repositories. For example, the OpenSSF Securing Software Repositories Working Group provides a framework for package repository security. Package repositories may leverage the framework to self-assess their security maturity and develop a plan to further strengthen their platforms over time. There are a number of further software supply chain security tools that can help identify vulnerabilities and threats posed by third-party libraries, but in general, the tools that offer insight into security threats found in libraries will only pinpoint what the problem is and how to solve it, however the actual fix must be applied manually by one or more developers.

### Description of Invention

There is thus a need for computer devices and methods for automatically updating application repositories on computer devices. Moreover, there is a need to reduce the required resources associated with identifying and mitigating security threats in application repositories, while increasing transparency of the security patch history, for example, for traceability or auditability.

According to an aspect of the present invention, there is provided a computer device including: a processor; and a memory coupled to the processor, the memory storing instructions, which when executed by the processor, cause the computer device to perform operations comprising: performing a thread check for critical vulnerabilities on all libraries of an application from an application repository which includes libraries; accessing a resource including fixed library versions and providing at least one fixed library version for fixing when the thread check revealed critical vulnerabilities; updating the at least one fixed library version in the application; running at least one unit test on the application including the at least one fixed library version; pushing the at least one fixed library version in the application repository when the at least one unit test was successful.

As used herein, the term processor refers to any kind of integrated circuit (IC) which is able to process and handle a provided set of instructions to be performed. For example, a processor may be a central processing unit (CPU), graphic processing unit (GPU), a field programmable gate array (FPGA), an application-specific integrated circuit (ASIC), and/or the like. The term memory refers to any kind of storage devices that can be coupled to a processor and which is able to store information. These information may include, but is not limited to, a set of instructions to be performed by a processor (program code and/or program data), a database, a report, and/or the like. For example, the memory may be a random-access memory (RAM), a read-only memory (ROM), a mass storage or a remote storage (e.g., a cloud-storage or a web-storage), and/or the like.

As used herein, the term thread check in the context of the present invention refers to performing operations in order to ensure safety and integrity of an application repository by searching for critical vulnerabilities in the dependencies of the application repository. The thread check is to be performed on all libraries of an application from an application repository which includes libraries. When the thread check reveals a critical vulnerability, a resource including fixed library versions can be accessed and at least one fixed library version for fixing can be provided for applying to the application. The accessed resource may be an internal resource of the computing device (e.g., the memory) or a remote resource (e.g., a cloud-storage or a web-storage).

The application repository may be located in the same computer device in which the instructions for the processor are stored, however, the present invention is not limited to such an embodiment. For example, the application repository may be stored in the memory of the computer device together with the instructions for the processor, or it may be remotely stored on a distant computer device or an remote memory (e.g., a cloud-storage or a web-storage) which have to be connected to the computer device according to the present invention. The application repository may thus be located in a cloud-storage or a memory on a distant computer device.

After the provision of at least one fixed library version for fixing when the thread check revealed critical vulnerabilities, the at least one fixed library version may be updated in the application. The updating may include replacing the corresponding library files in the application and performing further processes which may be required for the fixed library version to be used. The reference to at least one fixed library version means that possibly not all revealed critical vulnerabilities may have fixed library version or that some fixed library version are not available for the process. However, it is clear that it is highly preferred that all known critical vulnerabilities in the libraries are identified by the thread check and that all of these critical vulnerabilities are to be fixed by replacing all vulnerable libraries by corresponding fixed library versions when these are available. Any non-availability of fixed library may thus result in an incomplete fixing of the application but would still be covered by the inventive idea of the present invention.

As used herein, the term unit test refers to a software testing method that focuses on individual units or components of a software system. The purpose of unit testing is to validate that each unit of the software works as intended and meets the respective requirements. A unit generally refers to the smallest portion of code, such as a function or a method, that can be isolated and tested independently. This allows developers to quickly identify and fix any issues early in the development process, improving the overall quality of the software and reducing the time required for later testing.

The total number and the scope of performed unit tests may depend on, e.g., the complexity of the application, the total number of used libraries, the total number of program modules and/or the defined testing methodology. The total number and the scope of unit tests may thus specifically depend on the actual application. Therefore, running at least one unit test on the application including the at least one fixed library version may already be sufficient to verify the compatibility of the at least one fixed library with an correspondingly fixed application.

However, in a typical scenario it may be necessary to perform all possible unit tests on application components which could be compromised by a fixed library version, wherein typically all libraries which were found to have one or more critical vulnerability and for which a fixed library version is available should be included in a unit tests.

When the at least one unit test (or all possible or necessary unit tests related to an application under testing) was successful, at least one library in the application having a critical vulnerability is replaced by the at least one fixed library version.

According to some embodiments, performing a thread check for critical vulnerabilities may include: accessing a vulnerability database including critical vulnerabilities of libraries and on fixed library versions that fix the critical vulnerabilities; and searching for all libraries used by the application to check for critical vulnerabilities.

As used herein, the term vulnerability database refers to a database, list, look-up-table, and/or the like which contains all the information required for performing a thread check for critical vulnerabilities on all libraries of an application from an application repository which includes libraries. A vulnerability database may be a single database or a combination of two or more databases. The vulnerability database may be stored in the memory or in a remote memory (e.g., a cloud-storage or web-storage).

According to some embodiments, performing the operations may further comprise: generating a vulnerability report on all libraries used by the application that employ critical vulnerabilities and on the at least one fixed library version that fix the critical vulnerabilities when the thread check revealed critical vulnerabilities; and/or generating a success report when the at least one unit test was successful (in particular, when all unit tests that have been run were successful) or a fail report when at least one of the at least one unit test was not successful.

As used herein, the term vulnerability report refers to information on a result of the performed thread check. The vulnerability report may be provided as a document, log, list, table, illustration, or the like. It may include information about which libraries used by the application have unfixed critical vulnerabilities and which versions of fixed libraries can be applied to fix these vulnerabilities. Accessing a resource including fixed library versions and providing at least one fixed library version for fixing when the thread check revealed critical vulnerabilities, or updating the at least one fixed library version in the application may thus be based on a previously generated vulnerability report.

As used herein, the terms success report and fail report refer to information on a result of at least one unit test run. Said reports may be provided as a document, log, list, table, illustration, or the like. A success report may at least include the information that all performed unit tests were successful. Preferably, it may include further information about, for example, the details of the unit tests run, the dependencies between the fixed library versions and the unit tests, the resource of the fixed library versions, and/or the like. A fail report may at least include the information that at least one of the performed unit tests were not successful, however, also including detailed information about which unit test failed and which fixed library version was causing the failure is preferred. Preferably, also the fail report may include further information about, for example, the details of the unit tests run, the dependencies between the fixed library versions and the unit tests, the resource of the fixed library versions, and/or the like.

The provision of reports may increase transparency of the security patch history, for example, for traceability or auditability. The reports may also be directly used as a basis for later steps or operations.

According to some embodiments, at least one of the vulnerability report, the success report and the fail report may be stored in the memory or in a remote memory. The remote memory may be a random-access memory (RAM), a read-only memory (ROM), a mass storage or a remote storage (e.g., a cloud-storage or a web-storage), and/or the like. In particular, storing in a remote memory like a cloud-storage or a web-storage allows simple access to the reports.

According to some embodiments, the operations may further comprise: generating a support ticket for maintenance based on the fail report when a fail report was generated. In software development, when users encounter problems or have requests, they typically open support tickets. The tickets act as a log of issues and information, helping to understand issues and requests to resolve problems. In the present case, the support ticket may be automatically generated. They may be provided as a document, log, list, table, illustration, or the like. A support ticket may at least include the information that a fail report was generated. Preferably it may further include the fail report and the information included therein.

According to some embodiments, the one or more unit test is pre-defined for the application in a test database, and the test database is stored in the memory or in a remote memory. This relates to the fact that the total number and scope of unit tests may depend on the actual application. As it may be not directly clear from the application which unit tests can or may have to be performed, a corresponding test database including one or more application-specific predefined unit test may be provided which further specifies which unit test may be performed. Preferably, the database also includes information about the dependencies between the individual unit tests and the involved libraries. Further information on the dependencies between different libraries in the unit tests may be provided.

According to another aspect of the present invention, there is provided method for updating an application repository using libraries to be performed by a computer device, the method comprising: performing a thread check for critical vulnerabilities on all libraries of an application from an application repository which includes libraries; accessing a resource including fixed library versions and providing at least one fixed library version for fixing when the thread check revealed critical vulnerabilities; updating the at least one fixed library version in the application; running at least one unit test on the application including the at least one fixed library version; pushing the at least one fixed library version in the application repository when the at least one unit test was successful. The method may to be performed by a computer device according to the present invention.

According to some embodiments, the method may further include: accessing a vulnerability database including critical vulnerabilities of libraries and on fixed library versions that fix the critical vulnerabilities; and searching for all libraries used by the application to check for critical vulnerabilities.

According to some embodiments, the method may further include: generating a vulnerability report on all libraries used by the application that employ critical vulnerabilities and on the at least one fixed library version that fix the critical vulnerabilities when the thread check revealed critical vulnerabilities; and/or generating a success report when the at least one unit test was successful (in particular, when all unit tests that have been run were successful) or a fail report when at least one of the at least one unit test was not successful.

According to some embodiments, the method may further comprise generating a support ticket for maintenance based on the fail report when a fail report was generated.

The different method steps according to the another aspect of the present invention are directly related to the instructions stored in the memory of a computer device to be executed by the processor according to the aspect of the present invention related to the computer device. Therefore, the explanations regarding the operations performed by the processor and the further features related to the computer device as they were already discussed above also apply to a method of the another aspect of the present invention.

A computer device and method according to the present invention is thus able to automatically update application repositories on computer devices. In particular, a pipeline is provided which is able to automatically apply security patches for vulnerable library versions. This pipeline runs in a computer device that performs operations on a locally or remotely located software repository (must be accessible for the computer device) which include the identification, fixture and testing of applications including vulnerable libraries and pushing the fixed library versions to the application repository when corresponding unit test were successful. The deployment of security patches for application repositories can thus be simplified. When reports are generated and saved, transparency of the security patch history is increased, for example, for traceability or auditability.

The present invention includes essentially four fundamental steps. The first of these steps is a threat check in which a vulnerability report (or a corresponding set of instructions for the following steps) of all the libraries used by the application that employ critical vulnerabilities and the library versions that fix them may be generated. In the second step, which is a patching step, the vulnerability report (or the corresponding set of instructions) from the previous step may be used to update the libraries to the required version. The third step may be a test and report step. Upon the patch's completion, a job that runs unit tests may commence (the unit tests may be specific for each application). When the unit tests are successful, a success report may be generated in a separate job with the updated libraries. Alternatively, when at least one of the unit tests fail, a distinct fail report containing the library updates which caused the failure of the unit test may be generated. The final fourth step is a push step where the unit tests that pass the pipe may automatically push the updates to the application repository.

Certain embodiments of the present invention may include some, all, or none of the above advantages. One or more technical advantages may be readily apparent to those skilled in the art from the figures, descriptions, and claims included herein. Moreover, while specific advantages have been enumerated above, various embodiments may include all, some, or none of the enumerated advantages.

In addition to the exemplary aspects and embodiments described above, further aspects and embodiments will become apparent by reference to the figures and by study of the following detailed descriptions.

### Brief Description of the Drawings

Examples illustrative of embodiments are described below with reference to figures attached hereto. In the figures, identical structures, elements, or parts that appear in more than one figure are generally labeled with the same numeral in all the figures in which they appear. Alternatively, elements or parts that appear in more than one figure may be labeled with different numerals in the different figures in which they appear. Dimensions of components and features shown in the figures are generally chosen for convenience and clarity of presentation and are not necessarily shown in scale. The figures show:
- Fig. 1: a schematic illustration of a computer device according to an embodiment of the present invention and elements related to the operations performed by a processor of the computer device;
- Fig. 2: a schematic illustration of updating an application repository; and
- Fig. 3: a schematic illustration of the four fundamental steps of a method according to an embodiment of the present invention.

### Detailed Description of the Drawings

In the following description, various aspects of the disclosure will be described. For the purpose of explanation, specific configurations, and details are set forth in order to provide a thorough understanding of the different aspects of the disclosure. However, it will also be apparent to one skilled in the art that the disclosure may be practiced without specific details being presented herein. Furthermore, well-known features may be omitted or simplified in order not to obscure the disclosure.

Unless specifically stated otherwise, as apparent from the following discussions, it is appreciated that throughout the specification discussions utilizing terms such as "processing", "computing", "calculating", "determining", "estimating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices. In addition, the term "plurality" may be used throughout the specification to describe two or more components, devices, elements, parameters, and the like.

Embodiments of the present invention may include apparatuses, modules, devices, or components for performing the operations herein. This apparatus may be specially constructed for the desired purposes, or it may comprise a general-purpose computer selectively activated or reconfigured by a computer program stored in the computer. Such a computer program may be stored in a computer-readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read-only memories (EEPROMs), magnetic or optical cards, or any other type of media suitable for storing electronic instructions, and capable of being coupled to a computer system.

The disclosure may be described in the general context of computer-executable instructions, such as program modules, being executed by a computer. Generally, program modules include routines, programs, objects, components, data structures, and so forth, which perform particular tasks or implement particular abstract data types. The disclosure may also be practiced in distributed computing environments where tasks are performed by remote processing devices that are linked through a communications network. In a distributed computing environment, program modules may be located in both local and remote computer storage media including memory storage devices.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" or "comprising," when used in this specification, specify the presence of stated features, integers, steps, operations, elements, or components, but do not preclude or rule out the presence or addition of one or more other features, integers, steps, operations, elements, components, or groups thereof.

While a number of exemplary aspects and embodiments have been discussed above, those of skill in the art will recognize certain modifications, additions, and sub-combinations thereof. It is therefore intended that the following appended claims and claims hereafter introduced be interpreted to include all such modifications, additions, and sub-combinations as are within their scope.

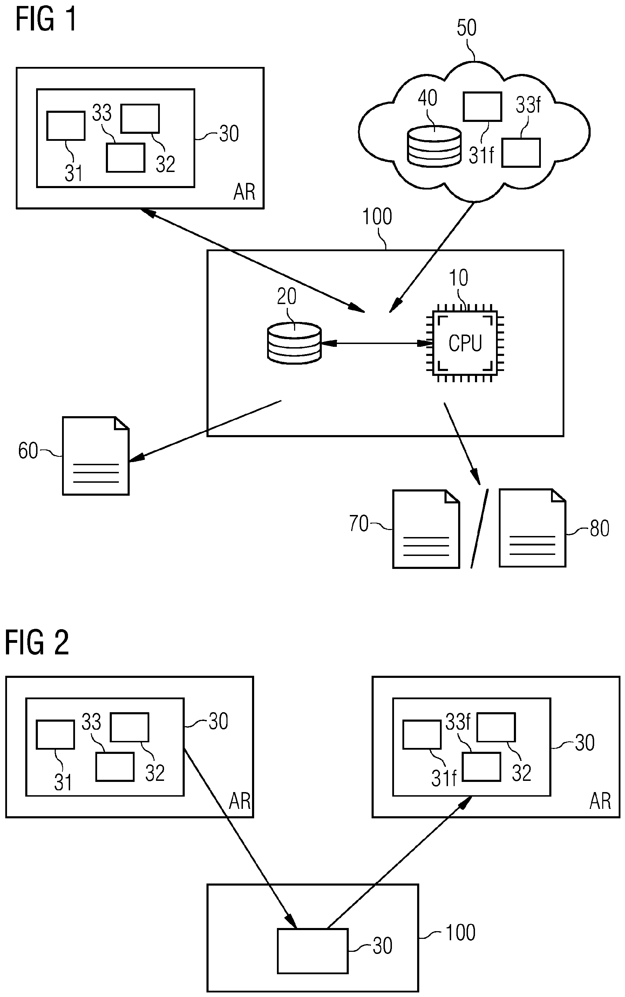

Figure 1 shows a schematic illustration of a computer device 100 according to an embodiment of the present invention and elements related to the operations performed by a processor 10 of the computer device 100. An computer device 100 according to the present invention includes the processor 10; and a memory 20 coupled to the processor 10, the memory 20 storing instructions, which when executed by the processor 10, cause the computer device 100 to perform operations including: performing a thread check for critical vulnerabilities on all libraries 31, 32, 33 of an application 30 from an application repository AR which includes libraries 31, 32, 33; accessing a resource 50 including fixed library versions 31f, 33f and providing at least one fixed library version 31f, 33f for fixing when the thread check revealed critical vulnerabilities; updating the at least one fixed library version 31f, 33f in the application 30; running at least one unit test on the application 30 including the at least one fixed library version 31f, 33f; pushing the at least one fixed library version 31f, 33f in the application repository AR when the at least one unit test was successful.

Performing a thread check for critical vulnerabilities may comprise: accessing a vulnerability database 40 including critical vulnerabilities of libraries and on fixed library versions 31f, 33f that fix the critical vulnerabilities; and searching for all libraries 31, 32, 33 used by the application 30 to check for critical vulnerabilities The vulnerability database 40 may be a local database stored in the memory 20 or a remote database (e.g., a cloud-storage or web-storage). In the present figure, the vulnerability database 40 may be found in a common resource 50 together with fixed library versions 31f, 33f, however, in other embodiments the vulnerability database 40 may be, e.g., found on a different resource (a local or remote resource) or directly included in the memory 20 of the computer device 100.

The operations may further comprise: generating a vulnerability report 60 on all libraries 31, 32, 33 used by the application 30 that employ critical vulnerabilities and on the at least one fixed library version 31f, 33f that fix the critical vulnerabilities when the thread check revealed critical vulnerabilities; and/or generating a success report 70 when the at least one unit test was successful (in particular, when all unit tests that have been run were successful) or a fail report 80 when at least one of the at least one unit test was not successful.

The at least one of the vulnerability report 60, the success report 70 and the fail report 80 may be stored in the memory 20 or in a remote memory.

Figure 2 shows a schematic illustration of updating an application repository AR. Before the operations are performed, the application repository AR may include a software 30 which includes libraries 31, 32, 33. In an exemplary embodiment, a computer device 100 according to an embodiment of the present invention may duplicate the application 30 contained in the application repository AR in the memory 20 and the operations performed by the processor 10 of the computer device 100 are performed on the duplicated application 30. When the at least one unit test (in particular, all unit tests that have been run) was successful (optionally a success report 70 may be generated), the at least one fixed library version 31f, 33f may be pushed in the application repository AR. Therefore, safety and integrity of the application repository can be ensured by patching the application repository AR only after testing. Although in this example the operations are described to be performed in regard to an application duplicate located on the same computing device which also holds the instructions, the present invention is not limited to such an embodiment. It is to be noted that the application repository as well as the application and further resources may be all or partly remote and/or a computing device according to the present invention may be configured to perform the operations to be effective on a remote resource.

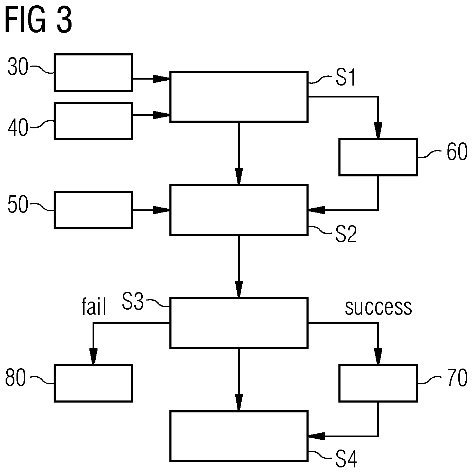

Figure 3 shows a schematic illustration of the four fundamental steps of a method according to an embodiment of the present invention. In particular, a method for updating an application repository AR using libraries 31, 32, 33 to be performed by a computer device 100 includes essentially four steps:
S1 is performing a thread check for critical vulnerabilities on all libraries 31, 32, 33 of an application 30 from an application repository AR which includes libraries 31, 32, 33, wherein this step may further include: accessing a vulnerability database 40 including critical vulnerabilities of libraries and on fixed library versions 31f, 33f that fix the critical vulnerabilities; and searching for all libraries 31, 32, 33 used by the application 30 to check for critical vulnerabilities. A vulnerability report 60 on all libraries 31, 32, 33 used by the application 30 that employ critical vulnerabilities and on the at least one fixed library version 31f, 33f that fix the critical vulnerabilities may be generated when the thread check revealed critical vulnerabilities. The vulnerability report 60 may directly be used as basis for the following step.
S2 is updating the at least one fixed library version 31f, 33f in the application 30, wherein a resource 50 including fixed library versions 31f, 33f may be accessed and at least one fixed library version (31f, 33f) for fixing when the thread check revealed critical vulnerabilities may be provided.
S3 is running at least one unit test on the application 30 including the at least one fixed library version 31f, 33f. A success report 70 may be generated when the at least one unit test was successful (in particular, when all unit tests that have been run were successful) or a fail report 80 may be generated when at least one of the at least one unit test was not successful.
S4 is pushing the at least one fixed library version 31f, 33f in the application repository AR when the at least one unit test was successful. This step may be based on the success report 70 generated in the previous step.

### List of References

- 10: processor
- 20: memory
- 30: application
- 31, 32, 33: libraries
- 31f, 33f: fixed library versions
- 40: vulnerability database
- 50: resource
- 60: vulnerability report
- 70: success report
- 80: fail report
- 100: computer device

- AR: application repository

## Claims

1. A computer device (100) comprising:
- a processor (10); and
- a memory (20) coupled to the processor (10), the memory (20) storing instructions, which when executed by the processor (10), cause the computer device (100) to perform operations comprising:
- performing a thread check for critical vulnerabilities on all libraries (31, 32, 33) of an application (30) from an application repository (AR) which includes libraries (31, 32, 33);
- accessing a resource (50) including fixed library versions (31f, 33f) and providing at least one fixed library version (31f, 33f) for fixing when the thread check revealed critical vulnerabilities;
- updating the at least one fixed library version (31f, 33f) in the application (30);
- running at least one unit test on the application (30) including the at least one fixed library version (31f, 33f);
- pushing the at least one fixed library version (31f, 33f) in the application repository (AR) when the at least one unit test was successful.

2. The computer device (100) of claim 1, wherein performing a thread check for critical vulnerabilities comprises:
- accessing a vulnerability database (40) including critical vulnerabilities of libraries and on fixed library versions (31f, 33f) that fix the critical vulnerabilities; and
- searching for all libraries (31, 32, 33) used by the application (30) to check for critical vulnerabilities.

3. The computer device (100) of claim 1 or 2, wherein the operations further comprise:
- generating a vulnerability report (60) on all libraries (31, 32, 33) used by the application (30) that employ critical vulnerabilities and on the at least one fixed library version (31f, 33f) that fix the critical vulnerabilities when the thread check revealed critical vulnerabilities; and/or
- generating a success report (70) when the at least one unit test was successful or a fail report (80) when at least one of the at least one unit test was not successful.

4. The computer device (100) of claim 3, wherein at least one of the vulnerability report (60), the success report (70) and the fail report (80) is stored in the memory (20) or in a remote memory.

5. The computer device (100) of claim 3 or 4, wherein the operations further comprise:
- generating a support ticket (90) for maintenance based on the fail report (80) when a fail report (80) was generated.

6. The computer device (100) of any one of the preceding claims, wherein the one or more unit test is pre-defined for the application (30) in a test database, and the test database is stored in the memory (20) or in a remote memory.

7. A method for updating an application repository (AR) using libraries (31, 32, 33) to be performed by a computer device (100), the method comprising:
- performing a thread check for critical vulnerabilities on all libraries (31, 32, 33) of an application (30) from an application repository (AR) which includes libraries (31, 32, 33);
- accessing a resource (50) including fixed library versions (31f, 33f) and providing at least one fixed library version (31f, 33f) for fixing when the thread check revealed critical vulnerabilities;
- updating the at least one fixed library version (31f, 33f) in the application (30);
- running at least one unit test on the application (30) including the at least one fixed library version (31f, 33f);
- pushing the at least one fixed library version (31f, 33f) in the application repository (AR) when the at least one unit test was successful.

8. The method of claim 7, further comprising:
- accessing a vulnerability database (40) including critical vulnerabilities of libraries and on fixed library versions (31f, 33f) that fix the critical vulnerabilities; and
- searching for all libraries (31, 32, 33) used by the application (30) to check for critical vulnerabilities.

9. The method of claim 7 or 8, further comprising:
- generating a vulnerability report (60) on all libraries (31, 32, 33) used by the application (30) that employ critical vulnerabilities and on the at least one fixed library version (31f, 33f) that fix the critical vulnerabilities when the thread check revealed critical vulnerabilities; and/or
- generating a success report (70) when the at least one unit test was successful or a fail report (80) when at least one of the at least one unit test was not successful.

10. The method of claim 9, further comprising:
- generating a support ticket (90) for maintenance based on the fail report (80) when a fail report (80) was generated.
